# EUROPEAN PATENT SPECIFICATION

(11) **EP 0 793 912 B1**
(45) Date of publication and mention of the grant of the patent: **31.07.2002**
(21) Application number: 97103892.2
(22) Date of filing: 07.03.1997
(51) Int. Cl.: A01K 89/01

(54) **Bail mounting structure for spinning reel for fishing**
Montagestruktur für einen Schnurführungsbügel einer Angelrolle
Structure de montage pour l'étrier d'un moulinet de pêche

(30) Priority: 07.03.1996 JP 7956096; 21.08.1996 JP 23852596
(43) Date of publication of application: 10.09.1997
(73) Proprietor: DAIWA SEIKO INC., Higashikurume-shi, Tokyo (JP)
(72) Inventor: Shinohara, Eiji, Higashikurume-shi, Tokyo (JP); Amano, Tomoyuki, Tokorozawa-shi, Saitama (JP)
(74) Representative: Grünecker, Kinkeldey, Stockmair & Schwanhäusser Anwaltssozietät

(56) References cited:
- FR-A- 1 238 987
- FR-A- 1 506 359
- US-A- 2 728 534
- US-A- 3 670 984
- US-A- 5 261 627

## Description

The present invention relates to a bail mounting structure for mounting a bail onto a mounting portion of at least one of bail support members according to the preamble of independent claim 1.

Conventionally, a fishing line guide device used in a spinning reel for fishing is structured such that a semi-annularly-shaped bail is supported by two support arms respectively formed on the two sides of a rotor through bail support members such as an arm lever having a fishline guide portion and a bail holder in such a manner that the bail can be freely reversed from a fishing line take-up position to a fishing line play-out position or vice versa.

There are conventionally known several structures for mounting an end portion of the bail in fishing line guide devices. For example, as disclosed in Japanese Utility Model Publication No. 3-79660 of Heisei, the end portion of the bail is inserted by a given amount into a bail support member which is reversibly supported in the front portion of the support arm of the rotor and, after then, the bail end portion is fixed by means of staking in order to prevent the removal. Also, as disclosed in Japanese Utility Model Publication No. 1-60670 of Heisei, after the bail end portion is inserted, it is fixed to the bail support member by a stop ring for prevention against removal. Further, there is known such fishing line guide device as shown in Fig. 18, in which the end portion of a bail 7" is fitted into and fixed to a hole 6q formed in a conical-shaped projecting portion 6p provided in a bail mounting portion 6.

However, the mounting structure disclosed in the former publication suffers from problems in that the staking process makes the fixing strength unstable and the repetition of reversing operation for a long period of time is likely to cause clattering.

Also, in the mounting structure disclosed in the latter publication, the assembling work becomes troublesome by use of the stop ring, the number of parts is increased, and the clattering cannot be prevented positively. That is, similarly to the former structure, there are still left problems to be solved such as a strange feeling caused by a noise (namely, a dual sound due to the clattering) produced when the bail is reversed and returned, and the like.

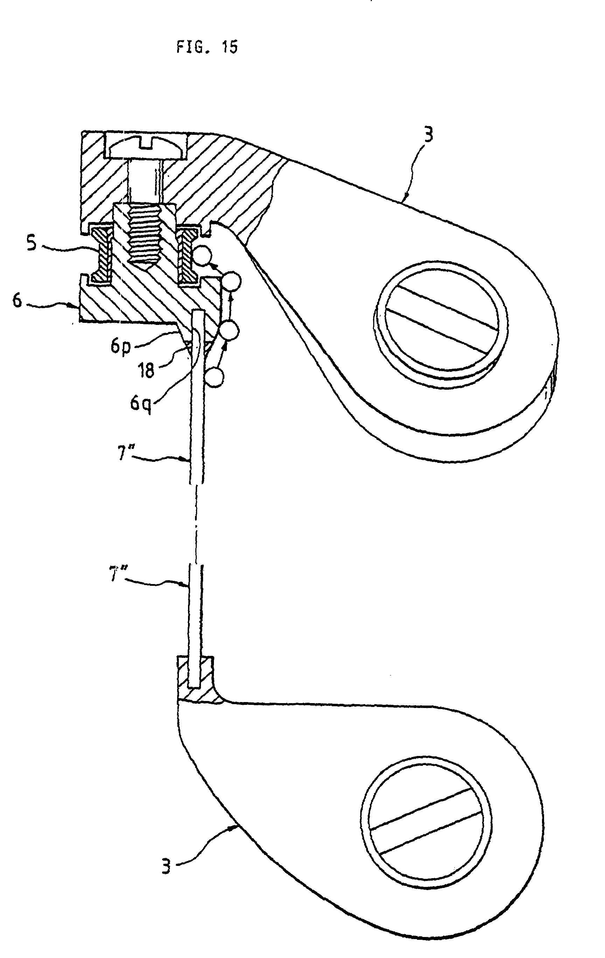

Further, in the conventional fishing line guide device shown in Fig. 15, since a level difference between the conical projecting portion 6p and bail 7" must be filled up by means of a silver solder 18 or the like, the finishing operation is troublesome.

From prior art document FR-A-1 238 987 a bail mounting structure for mounting a solid bail onto a mounting portion of at least one of bail support members in a fishing spinning reel is known. The bail support members are pivotably supported onto support arms of a rotor. The bail support member is provided with a receiving bore for receiving a securing projected portion formed on an end section of the bail. Said projected portion of the bail is inserted into said receiving bore.

Prior art document FR-A-1 506 359 teaches a bail mounting structure for mounting a solid bail onto a bail support member. Said bail is provided with a mounting section secured to a mounting piece of the bail support member.

Prior art document US-2,728,534 teaches a bail-mounting structure for mounting a solid bail onto a mounting portion of a bail support member. Said bail is provided with the screw section at the end thereof which is screwed into a respective bore provided onto the mounting portion of the bail support member.

From prior art document US-3,670,984 a further bail mounting structure for mounting a solid bail onto a mounting portion of a bail support member is known. As can be taken from said prior art, a bail in the form of a metal rod is provided with a part of reduced diameter and a threaded part. A conical member is molded in plastic material over parts. A nut is screwed onto an extended section of the threaded part to secure said part onto a bail supporting arm.

Prior art document US-5,261,627 teaches a bail mounting structure with a solid bail provided with a bail attaching portion. A lever support arm is provided with a bore for receiving a screw. Said screw is used for securing the bail attaching portion onto the support arm. The bail is integrally formed with the bail attaching portion. Alternatively, said bail is inserted into a bore provided with said bail attaching portion.

It is an objective of the present invention to provide a bail mounting structure as indicated above securely mounting the bail onto the mounting portion of the bail support member.

Hereinafter the present invention is illustrated and explained by means of preferred embodiments in conjunction with the accompanying drawings. In the drawings wherein:
Fig. 1 is a plan view of one bail support member and a reel main body bottom portion employed in a first embodiment of a spinning reel for fishing, and an enlarged plan view of the main portions of the above-mentioned one bail support member;
Fig. 2 is a plan view of the other bail support member and reel main body bottom portion employed the spinning reel for fishing according to the first embodiment;
Fig. 3 is a developed section plan view of the main portions of a pair of bail support members employed in the first embodiment;
Fig. 4 is a developed sectional plan view of the main portions of a pair of bail support members employed in a second embodiment;
Fig. 5 is a developed sectional plan view of the main portions of a pair of bail support members employed in a third embodiment;
Fig. 6 is a developed sectional plan view of the main portions of a pair of bail support members employed in a fourth embodiment;
Fig. 7 is a developed sectional plan view of the main portions of a pair of bail support members employed in a fifth embodiment;
Fig. 8 is a developed sectional plan view of the main portions of a pair of bail support members employed in a sixth embodiment;
Fig. 9 is a developed sectional plan view of the main portions of a pair of bail support members employed in a seventh embodiment;
Fig. 13 is a developed sectional plan view of the main portions of a pair of bail support members employed in an eighth embodiment;
Fig. 14 is a developed sectional plan view of the main portions of a pair of bail support members employed in a ninth embodiment ;
Fig. 15 is a developed sectional plan view of the main portions of a pair of bail support members employed in a tenth embodiment;
Fig. 16 is a developed sectional plan view of the main portions of a pair of bail support members employed in a eleventh embodiment;
Fig. 17 is a developed sectional plan view of the main portions of a pair of bail support members employed in a modification of the eleventh embodiment; and,
Fig. 18 is a developed sectional plan view of the main portions of a pair of bail support members employed in a conventional spinning reel for fishing.

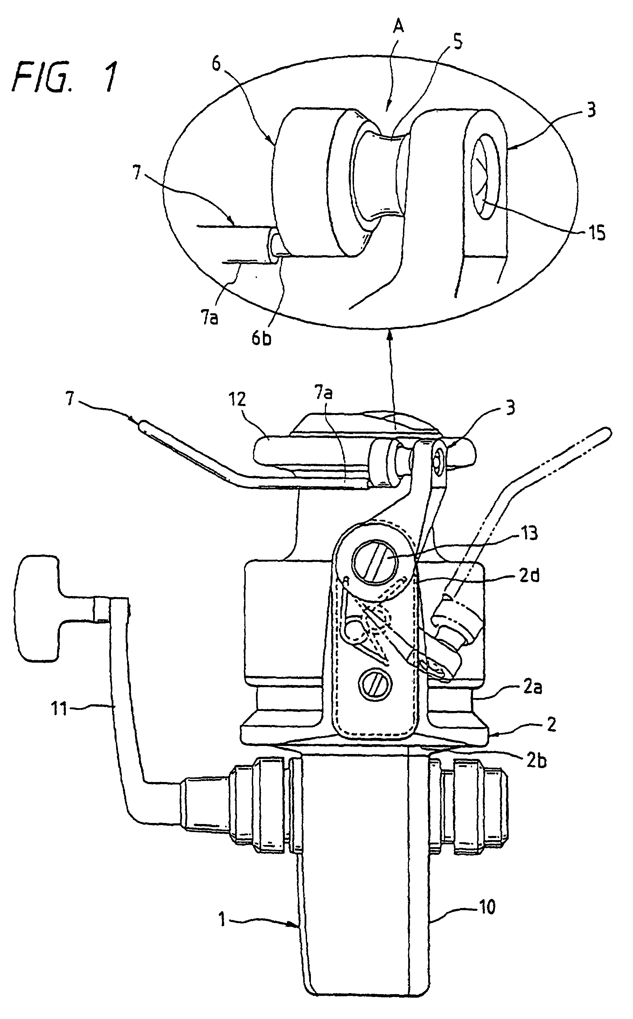

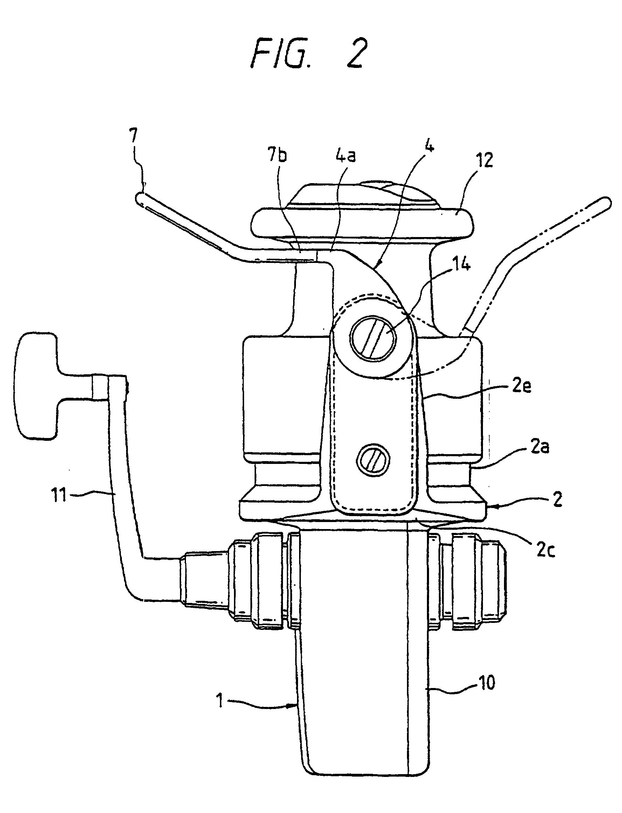

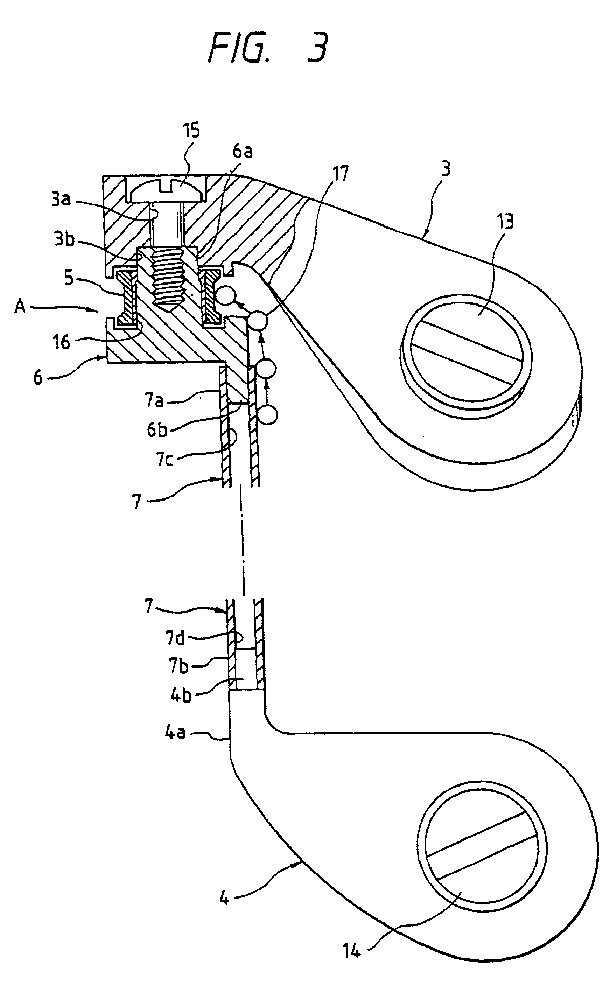

Now, description will be given below in detail with reference to the embodiments respectively shown in the accompanying drawings. In Figs. 1 to 3, there is shown a first embodiment of a spinning reel for fishing. In particular, Fig. 1 is a plan view of one of the bail support members provided in the spinning reel for fishing and the bottom portion of a reel main body of the spinning reel, and an enlarged plan view of the main portions of one bail support member. Fig. 2 is a plan view of the other bail support member of a spinning reel and the bottom portion of a reel main body thereof. Fig. 3 is a developed sectional plan view of the main portions of a pair of bail support members employed in the first embodiment.

In particular, a spinning reel for fishing according to the first embodiment comprises a reel main body 1, a rotor 2 mounted on a rotary shaft cylinder (not shown), a cover member 10 for covering the reel main body 1, a drive gear (not shown) supported within the cover member 10, a handle 11 which is mounted in such a manner that the mounting position thereof can be exchanged right and left, and a spool 12. In the present spinning reel for fishing, the rotor 2 can be rotated in linking with the rotational movements of the drive gear (not shown) and handle 11, and the spool 12 can be reciprocated back and forth in linking with the rotational movement of the rotor 2.

The rotor 2 includes a cylindrical portion 2a having a large diameter, while the cylindrical portion 2a includes base portions 2b and 2c. In the rotor 2, a pair of support arms 2d and 2e are respectively provided on the outer peripheries of the base portions 2b and 2c in such a manner that they project forwardly therefrom.

One bail support member 3 of the present fishing line guide device is reversibly supported through a screw shaft 13 in the leading end portion of one support arm 2d, while the other bail support member 4 of the present fishing line guide device is reversibly supported through a screw shaft 14 in the leading end portion of the other support arm 2e.

One bail support member 3 and the other bail support member 4 are held at their respective fishing line take-up positions shown by solid lines when the fishing line is taken up, whereas they are reversed to their respective fishing line play-out positions shown by two-dot chained lines when the fishing line is played out.

In the present fishing line guide device, a fishing line guide roller 5 and a bail mounting portion 6 respectively belonging to a fishing line guide part A are mounted on one bail support member 3, while one side end portion 7a of a hollow bail 7 is mounted on the bail mounting portion 6.

The other side end portion 7b of the bail 7 is fixed to the front side of the other bail support member 4.

In the leading end portion of one bail support member 3, there are formed a through hole 3a and a recessed portion 3b, while a screw 15 is inserted through the through hole 3a and is threadedly engaged with a screw hole formed in the shaft portion 6a of the bail mounting portion 6.

Also, the shaft portion 6a is inserted into and fitted with the recessed portion 3b.

Further, the fishing line guide roller 5 is rotatably fitted with the outer periphery of the shaft portion 6a with a shaft cylinder 16 interposed between them.

The bail mounting portion 6 includes a securing projected portion 6b formed on the outside thereof.

The bail 7, which is semi-annularly shaped and hollow, includes a securing recessed portion 7c formed in the one side end portion 7a thereof, while the securing recessed portion 7c is fitted by pressure with the securing projected portion of the bail mounting portion 6.

The other bail support member 4 includes a laterally projecting portion 4a formed in the front side thereof, while there is formed an engaging or securing projected portion 4b in the projecting portion 4a.

The bail 7 further includes a securing recessed portion 7d formed in the other side end portion 7b thereof, while the securing recessed portion 7d is fitted the securing projected portion 4b of the other bail support member 4 by pressure or other similar means.

The bail mounting portion 6, bail 7 and the other bail support member 4 may be bonded together when the securing recessed portion 7c is fitted with the securing projected portion 6b and the securing recessed portion 7d is fitted with the securing projected portion 4b.

Referring now to the operation of the spinning reel for fishing according to the first embodiment, when the terminal tackles (not shown) of the spinning reel are thrown out, the bail support members 3 and 4 are held at their respective fishing line play-out positions shown by the two-dot chained lines in Figs. 1 and 2 and a fishing line (not shown) wound around a spool 12 is played out.

After the terminal tackles are thrown out, if the rotor is rotated in linking with the rotation of the handle 11, then the bail support member 3 is butted against a butting portion (not shown) provided in a leg portion (not shown) of the reel main body 1 and is thereby reversed, with the result that the bail support members 3, 4 and bail 7 are raised up to their respective fishing line take-up positions shown by the solid lines.

At the then time, in Fig. 3, a fishing line 17 is picked up by the bail 7 and is then guided to the fishing line guide roller 5 of the fishing line guide part A.

If the rotor 2 is rotated in linking with the rotation of the handle 11, then the fishing line can be wound around the spool 12.

In the spinning reel for fishing structured in the above-mentioned manner, since the bail mounting portion 6 and bail 7 are fixed to each other in such a manner that the securing recessed portion 7c of the bail 7 is fitted with the securing projected portion 6d of the bail mounting portion 6, there can be provided a positive and simple structure which is able to maintain the function of the present fishing line guide device stably for a long period of time without causing any clattering.

Also, the fishing line 17 picked up by the bail 7 can be positively guided to the fishing line guide roller 5 of the fishing line guide part A without being caught by the securing recessed portion 7c or securing projected portion 6b, so that a fishing line take-up operation can be carried out comfortably.

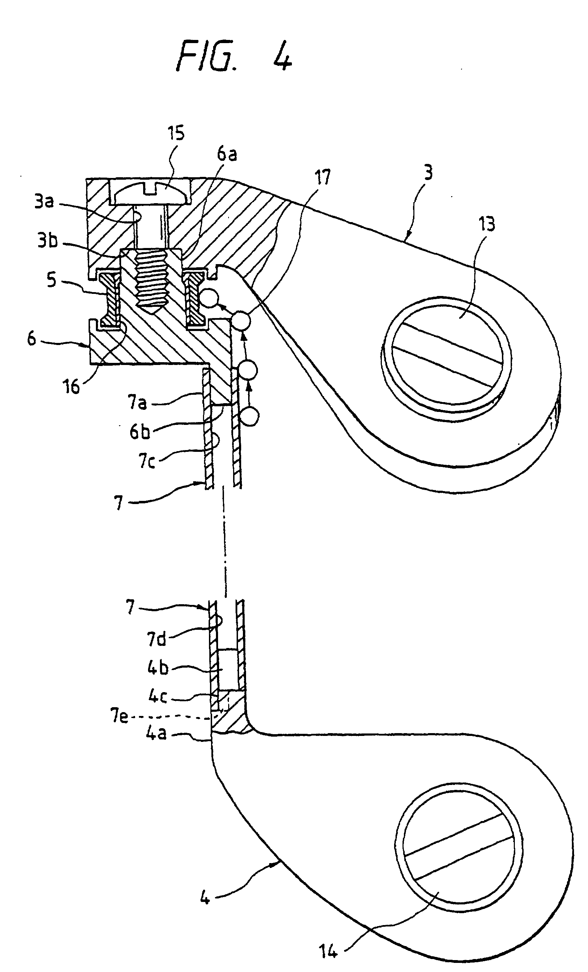

Now, in Fig. 4, there is shown a second embodiment of a spinning reel. for fishing. That is, Fig. 4 is a developed sectional plan view of the main portions of a pair of bail support members employed in the second embodiment.

In the second embodiment, there is formed a semi-circular protruded portion 7e adjacent the securing recessed portion 7d of the other side end portion 7b of the bail 7.

On the other hand, in the front side of the other bail support member 4, there is formed a projecting portion 4a which extends laterally and, in the projecting portion 4a, there is formed a semi-circular recessed portion 4c adjacent the securing projected portion 4b, with which the semi-circular notch 7e can be fitted when the securing recessed portion 7d is fitted with the securing projected portion 4b.

The remaining portions of the second embodiment are almost the same as those of the previously described first embodiment.

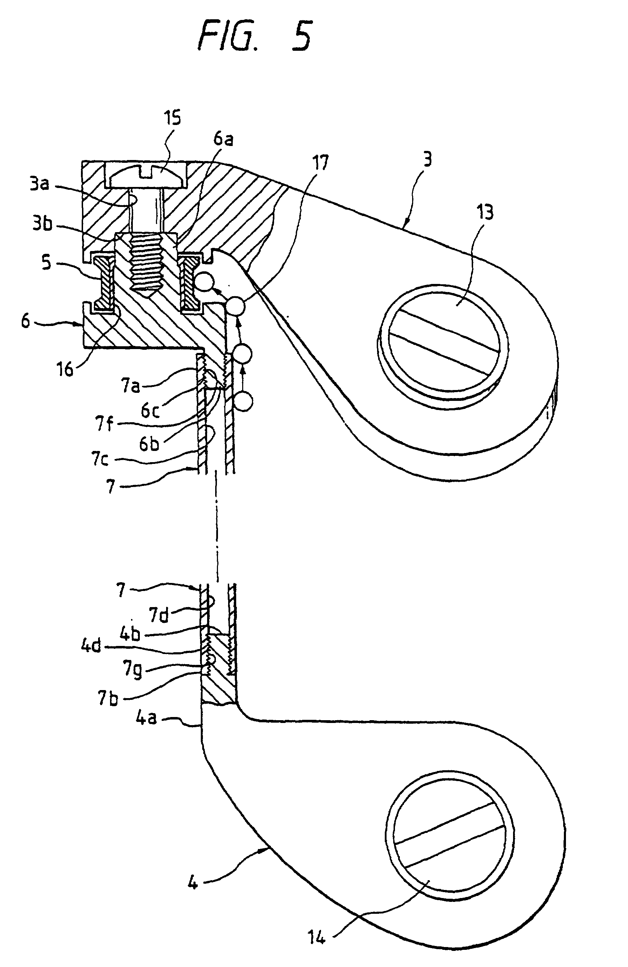

Now, in Fig. 5, there is shown a third embodiment of a spinning reel for fishing. That is, Fig. 5 is a developed sectional plan view of the main portions of a pair of bail support members employed in the third embodiment.

In the third embodiment, there is formed a securing projected portion 6b in the outside portion of the bail mounting portion 6 and, in the outer periphery of the securing projected portion 6b, there is formed a screw portion 6c.

Also, in the securing recessed portion 7c of one side end portion 7a of the semi-annular hollow bail 7, there is formed a screw portion 7f.

In the front portion of the other bail support member 4, there is formed a laterally projecting portion 4a, there is formed an engaging or securing projected portion 4b in the projecting portion 4a, and there is formed a screw portion 4d in the outer peripheral portion of the securing projected portion 4b.

In the securing recessed portion 7d of the other side end portion 7b of the bail 7, there is formed a screw portion 7g.

The screw portion 6c of the bail mounting portion 6 and the screw portion 7f of the bail 7 as well as the screw portion 4d of the other bail support member 4 and the screw portion 7g of the bail 7 are threadedly engaged with each other before one bail support member 3 is mounted onto the leading end portion of one support arm 2d by the screw shaft 13 and before the other bail support member 4 is mounted onto the leading end portion of the other support arm 2e by the screw shaft 14.

The remaining portions of the third embodiment are almost the same as those in the previously described first embodiment.

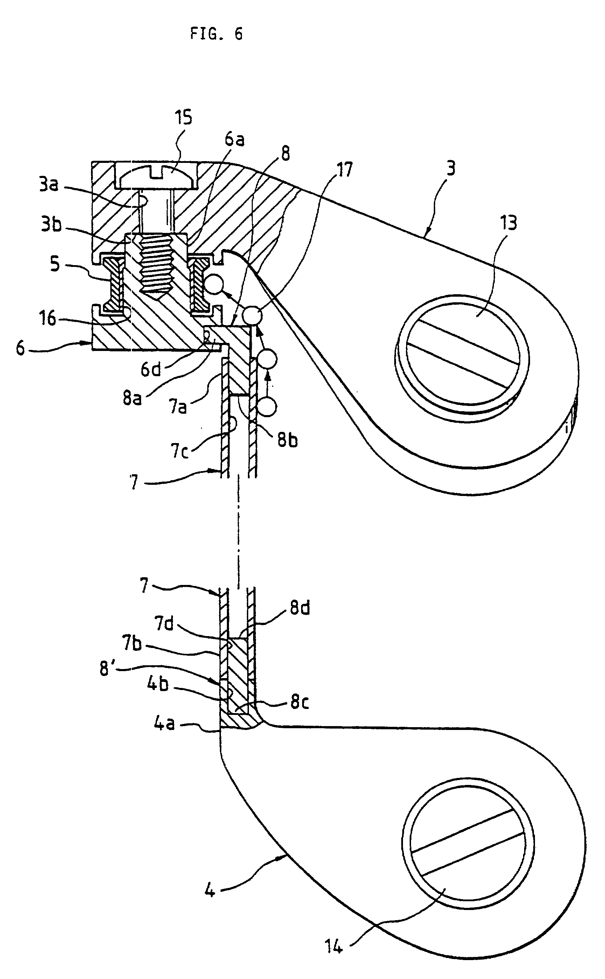

Now, in Fig. 6, there is shown a fourth embodiment of a spinning reel for fishing. In particular, Fig. 6 is a developed sectional plan view of the main portions of a pair of bail support members employed in the fourth embodiment.

In the fourth embodiment, the bail mounting portion 6 includes a recessed portion 6d which is formed in the outer periphery thereof, while one side portion 8a of an L-shaped connecting member 8 is fitted with the recessed portion 6d of the bail mounting portion 6.

A bail 7, which is hollow and is formed in a semi-annular shape, includes a securing recessed portion 7c formed in one side end portion 7a thereof, while the securing recessed portion 7c of the bail 7 is fitted with the other side portion 8b of the connecting member 8.

The other bail support member 4 includes a laterally projecting portion 4a formed in the front portion thereof and also a securing recessed portion 4b formed in the projecting portion 4a, while one side portion 8c of another connecting member 8' is fitted with the securing recessed portion 4b of the other bail support member 4 by pressure or by other similar means.

Also, the bail 7 further includes a securing recessed portion 7d formed in the other side end portion 7b thereof, while the securing recessed portion 7d of the bail 7 is fitted with the other side portion 8d of the connecting member 8' by pressure or by other similar means.

The remaining portions of the fourth embodiment are almost the same as those of the previously described first embodiment.

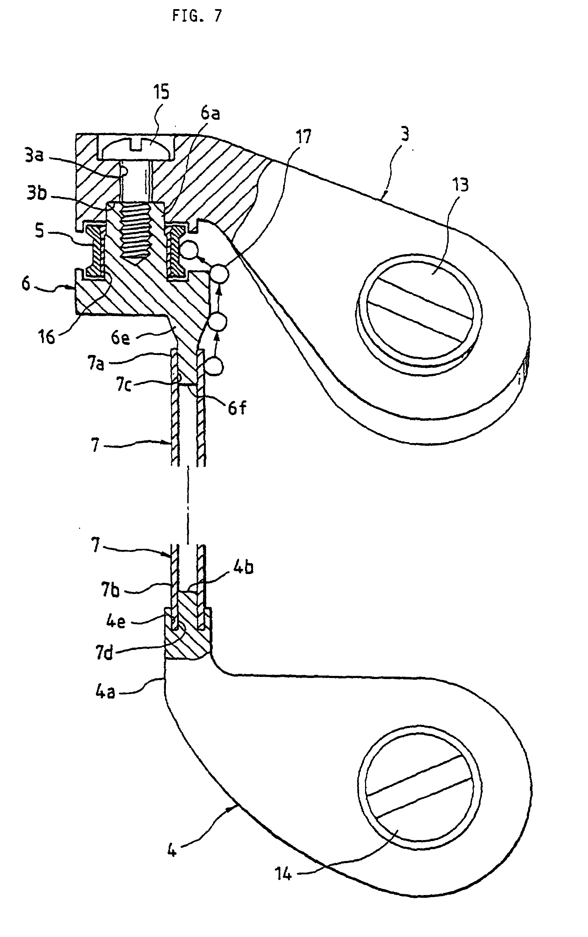

Now, in Fig. 7, there is shown a fifth embodiment of a spinning reel for fishing and, in particular, Fig. 7 is a developed sectional plan view of the main portions of a pair of bail support members employed in the seventh embodiment.

In the fifth embodiment, the bail mounting portion 6 includes a conically-shaped, projected portion 6e and a securing projected portion 6f which are respectively formed in the outside portion thereof.

A semi-annularly-shaped and hollow bail 7 includes a securing recessed portion 7c formed in one side end portion 7a thereof, while the securing recessed portion 7c of the bail 7 is fitted with the securing projected portion 6f of the bail mounting portion 6 by pressure or by other similar means.

The other bail support member 4 includes a laterally projecting portion 4a formed in the front side portion thereof and, in the projecting portion 4a, there are formed a groove-like engaging or securing recessed portion 4e and an engaging or securing projected portion 4b.

Also, the bail 7 further includes a securing recessed portion 7d formed in the other side end portion 7b thereof. The securing projected portion 4b of the other bail support member 4 is fitted with the inside portion of the securing recessed portion 7d of the bail 7 by pressure or by other similar means, while the outer periphery of the other side end portion 7b of the bail 7 is fitted with the securing recessed portion 4e of the other bail support member 4 by pressure or by other similar means.

The remaining portions of the fifth embodiment are almost the same as those of the previously described first embodiment.

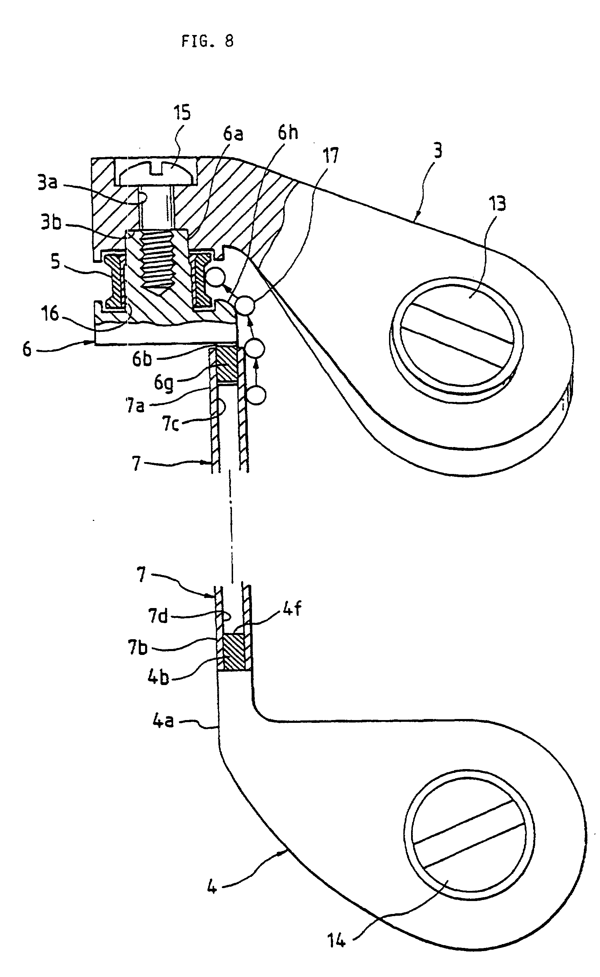

Now, in Fig. 8, there is shown a sixth embodiment of a spinning reel for fishing and, in particular, Fig. 8 is a developed sectional plan view of the main portions of a pair of bail support members employed in the ninth embodiment.

In the sixth embodiment, the bail mounting portion 6 of the fishing line guide part A includes a securing projected portion 6b and, in the outer periphery of the securing projected portion 6b, there is formed an uneven portion 6g by knurling.

A semi-annular and hollow bail 7 includes a securing recessed portion 7c formed in one side end portion 7a thereof, while the securing recessed portion 7c of the bail 7 is fitted with and secured to the securing projected portion 6b of the bail mounting portion 6 by pressure.

The bail mounting portion 6 includes a curved surface 6h which is formed on one bail support member 3 side thereof.

The other bail support member 4 includes a laterally projecting portion 4a formed in the front side portion thereof, there is formed an engaging or securing projected portion 4b in the projecting portion 4a, and there is formed by knurling an uneven portion 4f in the outer periphery of the securing projected portion 4b.

The bail 7 further includes a securing recessed portion 7d formed in the other side end portion 7b thereof, while the securing recessed portion 7d of the bail 7 is fitted with the securing projected portion 4b of the other bail support member 4 by pressure or by other similar means.

The remaining portions of the sixth embodiment are almost the same as those of the previously described first embodiment.

In the sixth embodiment, after the securing recessed portion 7c of the bail 7 is fitted with and secured to the securing projected portion 6b of the bail mounting portion 6 by pressure or by other similar means and the securing recessed portion 7d is fitted with and secured to the securing projected portion 4b of the other bail support member 4 by pressure or by similar means, even if there is applied a torsional stress, the knurled uneven portions 6g and 4f are sure to prevent removal of the associated bail mounting portion 6, bail 7 and the other bail support member 4, thereby allowing the bail support member to be reversed smoothly, so that the fishing line can be positively picked up by the bail 7.

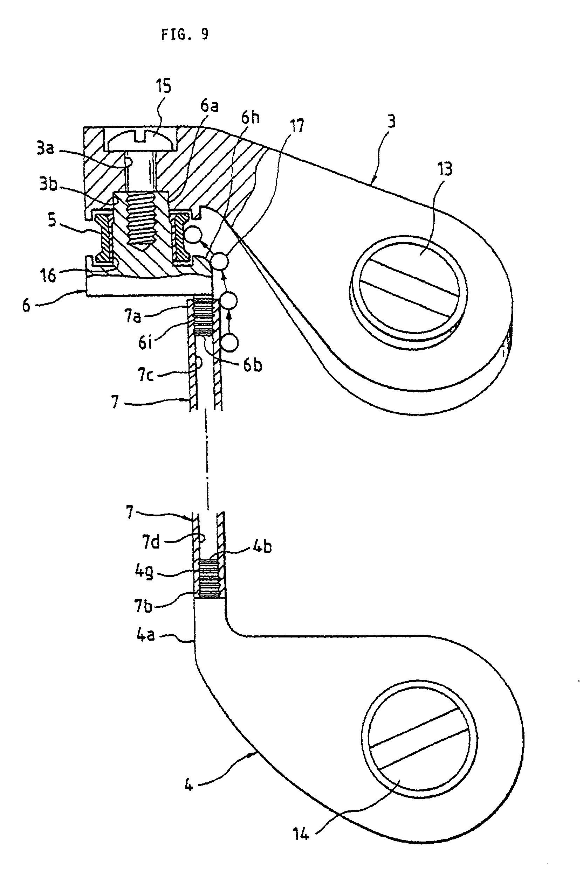

Now, in Fig. 9, there is shown a seventh embodiment of a spinning reel for fishing and, in particular, Fig. 9 is a developed sectional plan view of the main portions of a pair of bail support members employed in the seventh embodiment.

In the seventh embodiment, there is formed a securing projected portion in the outside portion of the bail mounting portion 6 and, at the same time, there is formed by doweling an uneven portion 6i in the outer periphery of the securing projected portion 6b.

A semi-annular and hollow bail 7 includes a securing recessed portion 7c formed in one side end portion 7a thereof, while the securing recessed portion 7c of the bail 7 is fitted with and secured to the securing projected portion 6b of the bail mounting portion 6 by pressure.

The other bail support member 4 includes a laterally projecting portion 4a formed in the front side portion thereof. Also, there is formed an engaging or securing projected portion 4b in the projecting portion 4a, and there is formed by doweling an uneven portion 4g in the outer periphery of the securing projected portion 4b.

The bail 7 further includes a securing recessed portion 7d formed in the other side end portion 7b thereof, while the securing recessed portion 7d of the bail 7 is fitted with and secured to the securing projected portion 4b of the other bail support member 4 by pressure or by other similar means.

The remaining portions of the seventh embodiment are almost the same as those of the previously described first embodiment.

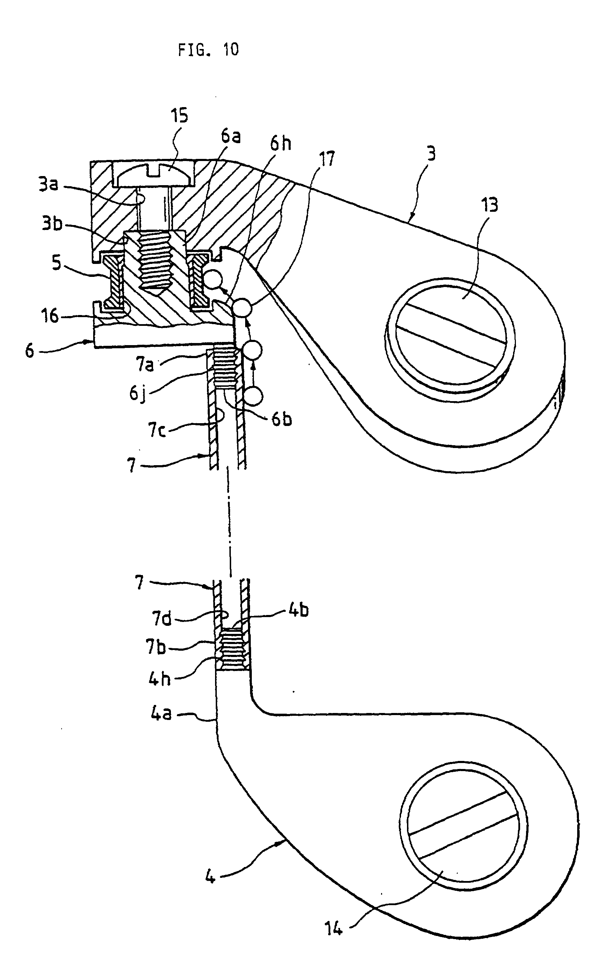

Now, in Fig. 10, there is shown an eighth embodiment of a spinning reel for fishing and, in particular, Fig. 10 is a developed sectional plan view of the main portions of a pair of bail support members employed in the eighth embodiment.

In the eighth embodiment, there is formed a securing projected portion 6b in the outside portion of the bail mounting portion 6, while a hook-shaped uneven portion 6j is formed by doweling in the outer periphery of the securing projected portion 6b.

A semi-annular and hollow bail 7 includes a securing recessed portion 7c formed in one side end portion 7a thereof, while the securing recessed portion 7c is fitted with and secured to the securing projected portion 6b of the bail mounting portion 6 by pressure.

The other bail support member 4 includes a laterally projecting portion 4a in the front side portion thereof, there is formed an engaging or securing projected portion 4b in the projecting portion 4a, and a hook-shaped uneven portion 4h is formed by doweling in the outer periphery of the securing projected portion 4b.

The bail 7 further includes a securing recessed portion 7d in the other side end portion 7b thereof, while the securing recessed portion 7d is fitted with and secured to the securing projected portion 4b by pressure or by other similar means.

The remaining portions of the eighth embodiment are almost the same as those of the previously described first embodiment.

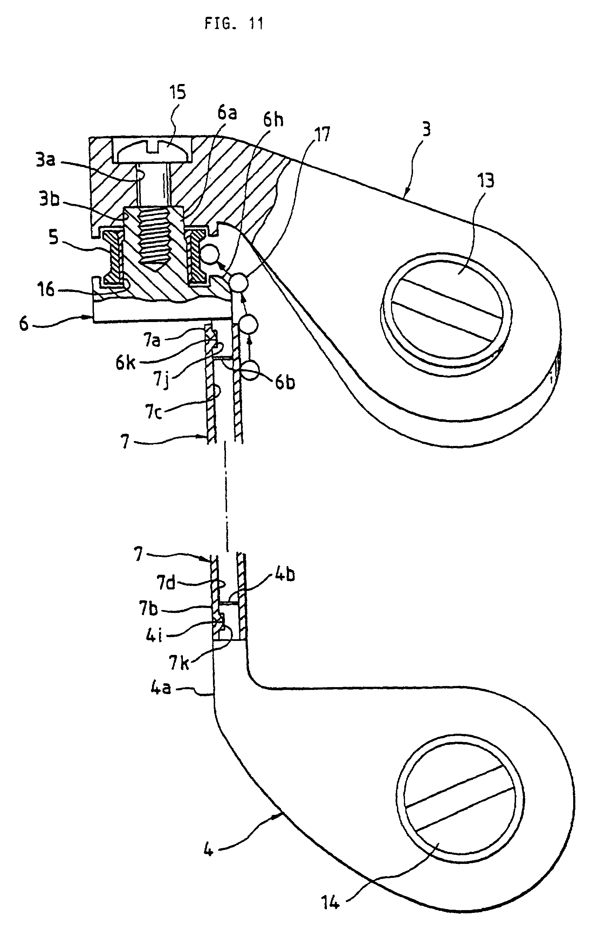

Now, in Fig. 11, there is shown a ninth embodiment of a spinning reel for fishing and, in particular, Fig. 11 is a developed sectional plan view of a pair of bail support members employed in the ninth embodiment.

In the ninth embodiment, there is formed a securing projected portion 6b in the outside portion of the bail mounting portion 6 and, at the same-time, an uneven portion 6k is formed in the outer periphery of the securing projected portion 6b by notching.

A semi-annular and hollow bail 7 includes a securing recessed portion 7c in one side end portion 7a thereof, while the securing recessed portion 7c is fitted with and secured to the securing projected portion 6b of the bail mounting portion 6. Also, the bail 7 further includes a projected portion 7j which is formed by punching on the opposite side of the bail 7 to the side thereof where the fishing line is to be picked up.

The other bail support member 4 includes a laterally projecting portion 4a formed in the front side portion thereof, there is formed an engaging or securing projected portion 4b, and an uneven portion 4i is formed in the outer periphery of the securing projected portion 4b by notching.

The other bail support member 4 further includes a securing recessed portion 7d formed in the other side end portion 7b thereof, while the securing recessed portion 7d is fitted with and secured to the securing projected portion 4b by pressure or by other similar means. Also, the bail 7 further includes a projected portion 7k which is formed by punching on the opposite side to the side thereof where the fishing line is picked up.

The remaining portions of the ninth embodiment are almost the same as those of the previously described first embodiment.

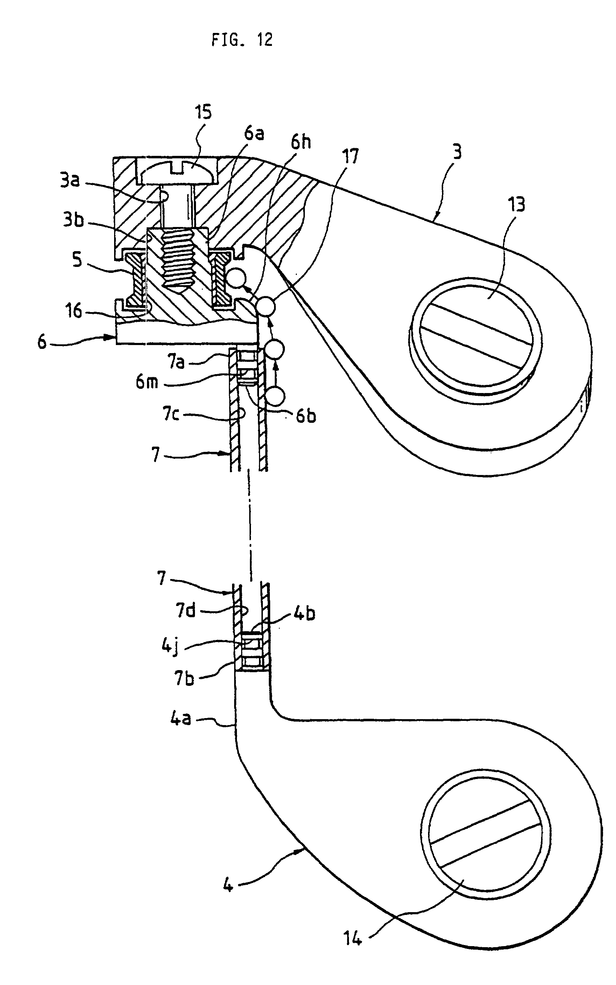

Now, in Fig. 12, there is shown a tenth embodiment of a spinning reel for fishing and, in particular, Fig. 12 is a developed sectional plan view of a pair of bail support members employed in the tenth embodiment.

In the tenth embodiment, there is formed a securing projected portion 6b in the outside portion of the bail mounting portion 6 and, in the outer periphery of the securing projected portion 6b, there is formed an uneven portion 6m which consists of several pieces of outer peripheral grooves.

A semi-annular and hollow bail 7 includes a securing recessed portion 7c formed in one side end portion 7a thereof, while the securing recessed portion 7c is fitted with and secured to the securing projected portion 6b by pressure and is also bonded thereto by an adhesive.

The other bail support member 4 includes a laterally projecting portion 4a formed in the front side portion thereof, there is formed an engaging or securing projected portion 4b in the projecting portion 4a, and, in the outer periphery of the securing projected portion 4b, there is formed an uneven portion 4j which consists of several pieces of outer peripheral grooves.

The bail 7 further includes a securing recessed portion 7d formed in the other side end portion 7b thereof, while the securing recessed portion 7d is fitted with and secured to the securing projected portion 4b by pressure and is also bonded thereto by an adhesive.

The remaining portions of the tenth embodiment are almost the same as those of the previously described first embodiment.

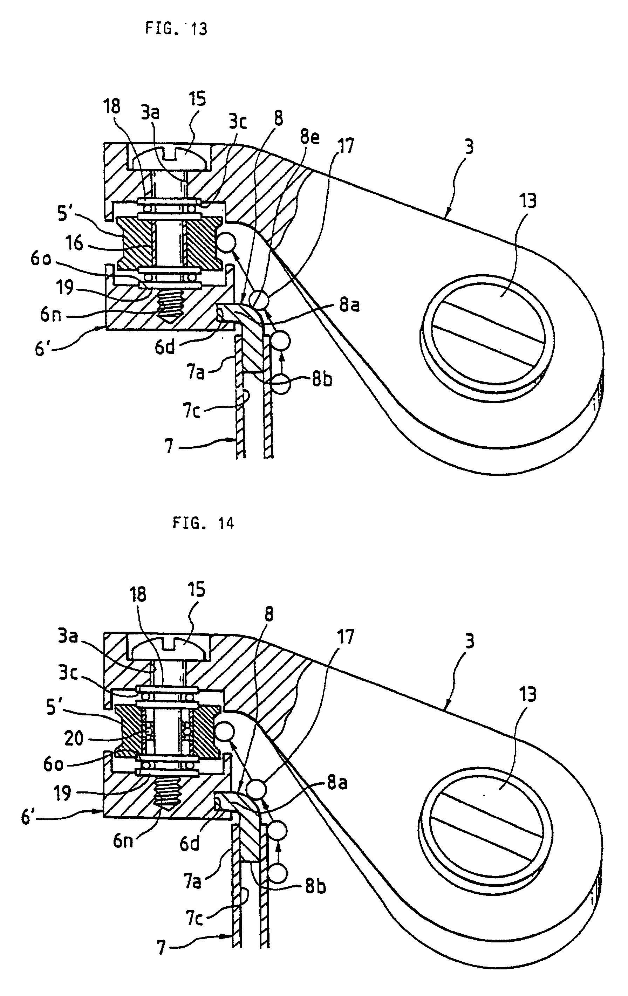

Now, in Fig. 13, there is shown a eleventh embodiment of a spinning reel for fishing and, in particular, Fig. 16 is a developed sectional plan view of a pair of bail support members employed in the eleventh embodiment.

In the eleventh embodiment, a fishing line guide roller 5' provided in the fishing line guide part A is mounted together with a bail support portion 6' to one bail support member 3 by a screw 15, with thrust ball bearings 18 and 19 interposed between them.

In the leading end portion of one bail support member 3, there are formed a through hole 3a and a recessed portion 3c into which part of the thrust ball bearing 18 can be fitted. Also, a screw 15 is inserted through the through hole 3a, thrust ball bearing 18, fishing line guide roller 5' and thrust ball bearing 19, and the screw 15 is further threadedly engaged with a screw hole 6n formed in the bail mounting portion 6'.

In the bail mounting portion 6', there is formed a recessed portion 6o into which part of the thrust ball bearing 19 can be fitted.

The fishing line guide roller 5' is rotatably fitted with the outer periphery of the shaft portion of the screw 15 with a shaft cylinder 16 interposed between them.

On the two sides of the fishing line guide roller 5', there are formed two recesses into which the thrust ball bearings 18 and 19 can be in part fitted respectively.

The bail mounting portion 6' includes a recessed portion 6d formed in the outer periphery thereof, while one side portion 8a of an L-shaped connecting member 8 is fitted with the recessed portion 6d.

A semi-annular and hollow bail 7 included a securing recessed portion 7c formed in one side end portion 7a thereof, while the securing recessed portion 7c is fitted with the other side portion 8b of the connecting member 8.

The surface of the connecting member 8 against which a fishing line 17 can be butted is formed in a curved surface 8e.

The other bail support member is so arranged as to have any one of the above-mentioned structures, while the other side end portion of the bail 7 is fitted with and secured to the other bail support member 4.

The remaining portions of the eleventh embodiment are almost the same as those of the previously described first embodiment.

Now, in Fig. 17, there is shown a modification of the above-mentioned eleventh embodiment and, in particular, Fig. 17 is a developed sectional plan view of a pair of bail support members employed in the present modification.

In the modification of the eleventh embodiment, a fishing line guide roller 5' is fitted with the outer periphery of the shaft portion of the screw 15 with a radial ball bearing 20 interposed between them.

The remaining portions of the present modification are almost the same as those of the eleventh embodiment.

In the above-mentioned description, the securing projected portions are formed in the outside portions of the bail mounting portions 6, 6', the other bail support member 4, and connecting members 8, 8', while the securing recessed portions are formed in one side end portions 7a or in the other side end portions 7b of the bails 7, 7'.

As described above, the present embodiments can provide effects as follows:

Since the bail mounting portion and bail are fixed to each other in such a manner that a securing projected portion formed in the bail mounting portion is fitted with a securing recessed portion formed in the bail, the function of the present fishing line guide device can be maintained stably and surely for a long period of time by means of a simple structure without causing any clattering.

A fishing line picked up by the bail can be positively guided to the fishing line guide roller of the fishing line guide part without being caught by the securing recessed portion or securing projected portion, so that a fishing line take-up operation can be carried out comfortably.

Since there are formed uneven portions respectively in the outer peripheries of the securing projected portions of the bail mounting portion and the other bail support member and a securing recessed portion formed in the end portion of the bail is fitted with and secured to the uneven portions, even if there is applied a torsional stress, the bail mounting portion, the other bail support member and bail can be surely prevented against removal from each other, so that the fishing line can be picked up by the bail positively.

## Claims

1. A bail mounting structure for mounting a bail (7) onto a mounting portion (6, 4a) of at least one of bail support members (3, 4) in a fishing, spinning reel wherein the bail support members (3, 4) are pivotably supported respectively onto support arms (2d, 2e) of a rotor (2) rotatable in linking with rotation of a handle (11) so that the bail support members (3, 4) are movable between a fishing line take-up position and a fishing line play-out position,
**characterized in that** said bail (7) is hollow, and a securing recessed portion (7c, 7d) is formed in an end portion (7a, 7b) of said hollow bail (7); a securing projected portion (6b, 4b, 8b, 8d, 6f) is provided on the mounting portion (6, 4a) of the bail support member (3, 4) and securely inserted into the securing recessed portion (7c, 7d).

2. A bail mounting structure according to claim 1, **characterized in that** an integral portion of the mounting portion (6, 4a) of the bail support member (3, 4) forms the securing projected portion (6b, 4b, 6f).

3. A bail mounting structure according to claim 1, **characterized in that** a separate member (8, 8') is fixed to the mounting portion (6, 4a) of the bail support member (3, 4) to form the securing projected portion (8b, 8d).

4. A bail mounting structure according to at least one of the claims 1 to 3, **characterized in that** the securing recessed portion (7c, 7d) defines a hollow cylindrical portion and the securing projected portion (6b, 4b, 8b, 8d, 6f) defines a circular column received by an inner cylindrical surface of the hollow cylindrical portion.

5. A bail mounting structure according to at least one of the claims 1 to 4, **characterized in that** an outer peripheral surface of the end portion (7a, 7b) of the bail (7) is located radially outwardly of the securing projected portion (6b, 4b, 8b, 8d, 6f).

6. A bail mounting structure according to at least one of the claims 1 to 5, **characterized in that** an uneven portion (6g, 4f, 6i, 4g, 6j, 4h, 6k, 4i, 6m, 4j) is formed on an outer periphery of the securing projected portion (6b, 4b), and the uneven portion (6g, 4f, 6i, 4g, 6j, 4h, 6k, 4i, 6m, 4j) is received by an inner cylindrical surface of the securing recessed portion (7c, 7d).

7. A bail mounting structure according to at least one of the claims 1 to 6, **characterized in that** the securing projected portion (6b, 4b, 8b, 8d, 6f) and the mounting portion (6, 4a) of the bail support member (3, 4) cooperatively define a step contacting an axial terminus of the end portion (7a, 7b) of the bail (7).

## Patentansprüche

1. Bügelmontageaufbau zum Montieren eines Bügels (7) auf einem Montageabschnitt (6, 4a) von zumindest einem der Bügeltragteile (3, 4) in einer sich drehenden Angelrolle, wobei die Bügeltragteile (3, 4) jeweils drehbar auf den Tragarmen (2d, 2e) eines Rotors (2) drehbar in Verbindung mit der Drehung eines Handgriffes (11) gelagert sind, so daß die Bügeltragteile (3, 4) zwischen einer Angelschnur- Aufnahmeposition und einer Angelschnur- Ausgabeposition beweglich sind,
**dadurch gekennzeichnet, daß** der Bügel (7) hohl ist, und ein befestigender, ausgenommener Abschnitt (7c, 7d) in einem Endabschnitt (7a, 7b) des hohlen Bügels (7) gebildet ist;
ein befestigender, vorspringender Abschnitt (6b, 4b, 8b, 8d, 6f) an dem Montageabschnitt (6, 4a) des Bügeltragteiles (3, 4) vorgesehen und in den befestigenden, ausgenommenen Abschnitt (7c, 7d) sicher eingesetzt ist.

2. Bügelmontageaufbau nach Anspruch 1, **dadurch gekennzeichnet, daß** ein einstükkiger Abschnitt des Montageabschnittes (6, 4a) des Bügeltragteiles (3, 4) den befestigenden, vorspringenden Abschnitt (6b, 4b, 6f) bildet.

3. Bügelmontageaufbau nach Anspruch 1, **dadurch gekennzeichnet, daß** ein gesondertes Teil (8, 8') an dem Montageschnitt (6, 4a) des Bügeltragteiles (3, 4) befestigt ist, um den befestigenden, vorspringenden Abschnitt (8b, 8d) zu bilden.

4. Bügelmontageaufbau nach zumindest einem der Ansprüche 1 bis 3, **dadurch gekennzeichnet, daß** der befestigende, ausgenommenen Abschnitt (7c, 7d) einen hohlen, zylindrischen Abschnitt bildet und der befestigende, vorspringende Abschnitt (6b, 4b, 8b, 8d, 6f) bildet eine kreisförmige Säule, aufgenommen durch eine innere zylindrische Oberfläche des hohlen, zylindrischen Abschnittes.

5. Bügelmontageaufbau nach zumindest einem der Ansprüche 1 bis 4, **dadurch gekennzeichnet, daß** eine Außenumfangsfläche des Endabschnittes (7a, 7b) des Bügels (7) radial nach außen des befestigenden, vorspringenden Abschnittes (6b, 4b, 8b, 8d, 6f) platziert ist.

6. Bügelmontageaufbau nach zumindest einem der Ansprüche 1 bis 5, **dadurch gekennzeichnet, daß** ein unebener Abschnitt (6g, 4f, 6i, 4g, 6j, 4h, 6k, 4i, 6m, 4j)an einem Außenumfang des befestigenden , vorspringenden Abschnittes (6b, 4b) gebildet ist, und ein unebener Abschnitt (6g, 4f, 6i, 4g, 6j, 4h, 6k, 4i, 6m, 4j) ist durch eine innere zylindrische Oberfläche des befestigenden, ausgenommenen Abschnittes (7c, 7d) aufgenommen.

7. Bügelmontageaufbau nach zumindest einem der Ansprüche 1 bis 6, **dadurch gekennzeichnet, daß** der befestigende, vorspringende Abschnitt (6b, 4b, 8b, 8d, 6f) und der Montageabschnitt (6, 4a) des Bügeltragteiles (3,4) gemeinsam eine Stufe bilden, die ein axiales Ende des Endabschnittes (7a, 7b) des Bügels (7) berühren.

## Revendications

1. Structure de montage d'étrier pour monter un étrier (7) sur une partie de montage (6, 4a) d'au moins un parmi des éléments de support d'étrier (3, 4) dans un moulinet de pêche dans lequel les éléments de support d'étrier (3, 4) sont supportés de manière pivotante respectivement sur des bras de support (2d, 2e) d'un rotor (2) pouvant tourner en liaison avec la mise en rotation d'une poignée (11) de sorte que les éléments de support d'étrier (3, 4) sont mobiles entre une position d'enroulement de ligne de pêche et une position de déroulement de ligne de pêche, **caractérisés en ce que** ledit étrier (7) est creux, et une partie de fixation en creux (7c, 7d) est formée dans une partie d'extrémité (7a, 7b) dudit étrier creux (7), et une partie de fixation en saillie (6b, 4b, 8b, 8d, 6f) est agencée sur la partie de montage (6, 4a) de l'élément de support d'étrier (3, 4) et insérée de manière ferme dans la partie de fixation en creux (7c, 7d).

2. Structure de montage d'étrier selon la revendication 1, **caractérisés en ce qu'**une partie venue de matière de la partie de montage (6, 4a) de l'élément de support d'étrier (3, 4) forme la partie de fixation en saillie (6b, 4b, 6f).

3. Structure de montage d'étrier selon la revendication 1, **caractérisée en ce qu'**un élément séparé (8, 8') est fixé sur la partie de montage (6, 4a) de l'élément de support d'étrier (3, 4) pour former la partie de fixation en saillie (8b, 8d).

4. Structure de montage d'étrier selon l'une quelconque des revendications 1 à 3, **caractérisée en ce que** la partie de fixation en creux (7c, 7d) définit une partie cylindrique creuse et la partie de fixation en saillie (6b, 4b, 8b, 8d, 6f) définit une colonne circulaire reçue par une surface cylindrique intérieure de la partie cylindrique creuse.

5. Structure de montage d'étrier selon l'une quelconque des revendications 1 à 4, **caractérisée en ce qu'**une surface périphérique extérieure de la partie d'extrémité (7a, 7b) de l'étrier (7) est positionnée radialement vers l'extérieur de la partie de fixation en saillie (6b, 4b, 8b, 8d, 6f).

6. Structure de montage d'étrier selon l'une quelconque des revendications 1 à 5, **caractérisée en ce qu'**une partie irrégulière (6g, 4f, 6i, 4g, 6j, 4h, 6k, 4i, 6m, 4j) est formée sur une périphérie extérieure de la partie de fixation en saillie (6b, 4b), et la partie irrégulière (6g, 4f, 6i, 4g, 6j, 4h, 6k, 4i, 6m, 4j) est reçue par une surface cylindrique intérieure de la partie de fixation en creux (7c, 7d).

7. Structure de montage d'étrier selon l'une quelconque des revendications 1 à 6, **caractérisée en ce que** la partie de fixation en saillie (6b, 4b, 8b, 8d, 6f) et la partie de montage (6, 4a) de l'élément de support d'étrier (3, 4) définissent par coopération un gradin venant en contact avec l'extrémité axiale de la partie d'extrémité (7a, 7b) de l'étrier (7).
